# FASCICULE DE BREVET EUROPEEN

(11) **EP 0 929 393 B1**
(45) Date de publication et mention de la délivrance du brevet: **28.11.2001**
(21) Numéro de dépôt: 97942077.5
(22) Date de dépôt: 24.09.1997
(51) Int. Cl.: B29C 65/20

(54) **MACHINE DE SOUDAGE PAR PLAQUE CHAUFFANTE A TABLE MOBILE**
SCHWEISSVORRICHTUNG MIT HEIZPLATTE UND VERSTELLBAREM TISCH
HEATING PLATE WELDING MACHINE WITH MOBILE TABLE

(30) Priorité: 25.09.1996 FR 9611980
(43) Date de publication de la demande: 21.07.1999
(73) Titulaire: Etudes Realisations Techniques et Commerciales, 74800 La Roche sur Foron (FR)
(72) Inventeur: MUSOLINO, François, F-74140 Douvaine (FR)
(74) Mandataire: Poncet, Jean-François
(86) Numéro de dépôt international: FR9701671
(87) Numéro de publication internationale: WO9813193

(56) Documents cités:
- EP-A- 0 327 265
- EP-A- 0 447 932
- WO-A-95/18714
- DE-A- 1 704 263
- DE-A- 3 118 009
- FR-A- 2 320 839
- FR-A- 2 688 736
- GB-A- 1 486 842
- GB-A- 2 085 354
- LU-A- 60 356
- US-A- 4 960 478
- US-A- 4 999 908
- PATENT ABSTRACTS OF JAPAN vol. 009, no. 039 (E-297), 19 février 1985 & JP 59 180960 A (SHINKOUBE DENKI KK), 15 octobre 1984,
- PATENT ABSTRACTS OF JAPAN vol. 005, no. 197 (E-086), 15 décembre 1981 & JP 56 118261 A (YUASA BATTERY CO LTD), 17 septembre 1981,
- DATABASE WPI Week 7950 Derwent Publications Ltd., London, GB; AN 79-90288b-50 XP002033160 & JP 54 141 867 A (MEIJI RUBBER & CHEM) , 5 novembre 1979

## Description

### EXPOSE DE L'INVENTION

La présente invention concerne les machines de soudage par plaque chauffante, qui sont généralement utilisées pour souder entre elles deux pièces de matière thermosoudable selon des surfaces de raccordement respectives pouvant être planes ou non planes.

Le document GB 2 085 354 A décrit une telle machine de soudage par plaque chauffante, dans laquelle un bâti porte les différents organes fonctionnels de la machine comprenant une plaque chauffante, un premier dispositif porte-pièce, et un second dispositif porte-pièce disposé en regard du premier dispositif porte-pièce. Des premiers moyens permettent de déplacer la plaque chauffante selon une course d'insertion transversale parallèlement à son plan entre une position de soudure engagée entre les premier et second dispositifs porte-pièce et une position de chargement en retrait des premier et second dispositifs porte-pièce. Des seconds moyens permettent de déplacer la plaque chauffante selon une course de soudure perpendiculairement à son plan entre deux positions extrêmes. Le premier dispositif porte-pièce est fixe sur le bâti. Le second dispositif porte-pièce est mobile, et peut être déplacé par ces mêmes seconds moyens selon une course de contact perpendiculaire au plan de la plaque chauffante entre des positions extrêmes vers et à l'écart du premier dispositif porte-pièce.

Les mouvements de la plaque chauffante, selon la course d'insertion et selon la course de soudure, sont généralement linéaires et commandés par des vérins autorisant des amplitudes de mouvement limitées par l'encombrement autorisé des vérins de la machine. De même, le mouvement du second dispositif porte-pièce selon la course de contact est assuré par un vérin autorisant une amplitude de mouvement limitée.

Pour le fonctionnement, au moins une première pièce à souder est placée sur le premier porte-pièce, tandis qu'au moins une seconde pièce à souder est fixée au second porte-pièce, des outillages spécifiques assurant la liaison entre chaque porte-pièce et la pièce à souder correspondante. On règle la machine pour que la plaque chauffante puisse venir en appui par sa première face sur la première pièce à souder disposée sur le premier porte-pièce, par le fait que la seconde pièce à souder est appliquée contre la face opposée de la plaque chauffante par le second porte-pièce, pendant une étape de chauffe. Le second porte-pièce est ensuite écarté, puis la plaque chauffante est escamotée à l'écart des deux porte-pièces. Le second porte-pièce est à nouveau sollicité pour plaquer les deux pièces à souder l'une contre l'autre selon leurs surfaces de raccordement dont la matière plastique est suffisamment ramollie ou fondue pour assurer une soudure.

Pendant la course de soudure, la plaque chauffante est flottante, et repose par gravité sur la seconde pièce à souder fixée au second porte-pièce. Ainsi, la plaque chauffante n'est pas tenue positivement pour être déplacée selon une course de soudure déterminée. Il en résulte un manque de reproductibilité de la soudure.

On comprend aussi que les divers mouvements nécessaires limitent, pour chaque machine donnée, les dimensions maximales des pièces que l'on peut souder.

Sur une même machine, on peut souder des pièces de formes différentes en adaptant des outillages spécifiques appropriés, mais le réglage de la machine est complexe car les courses des vérins de déplacement de la plaque chauffante et du second dispositif porte-pièce sont affectées par les différences de dimensions des outillages et des pièces à souder.

Dans le document FR 2 320 839 A, le réglage s'effectue par les vérins déplaçant le premier porte-pièce. Un tel réglage n'est toutefois pas fiable, et aucun moyen de réglage n'est explicitement décrit, d'autant que ce document concerne le soudage de boîtiers d'accumulateurs dont les dimensions sont vraisemblablement constantes. En outre, le chauffage s'effectue par des joues chauffantes, qui diffèrent d'une structure en forme de plaque chauffante définissant un plan, et qui ne sont pas déplacées selon une course d'insertion et une course de soudure perpendiculaires.

Le document FR 2 688 736 A décrit une machine similaire, mais dans laquelle le premier porte-pièce est fixe, dépourvu de moyens de réglage.

Ainsi, dans les machines connues, il n'y a pas de moyens permettant un réglage fiable et rapide de la machine pour suivre les variations de taille de pièces à souder, et permettant de tenir efficacement les pressions exercées lors du fonctionnement de la machine.

### EXPOSE DE L'INVENTION

Le problème proposé par la présente invention est de concevoir des perfectionnements aux machines de soudage de pièces par plaque chauffante, permettant, sans modifier l'encombrement global de la machine, et en utilisant les outillages traditionnels disponibles jusqu'à présent, d'augmenter sensiblement les variations possibles des dimensions des pièces que la machine peut souder, en conservant une bonne reproductibilité de la soudure.

De préférence, ces possibilités accrues de modification de dimensions des pièces à souder doivent être obtenues sans compliquer les opérations de commande des vérins actionnant les parties mobiles de la machine, et sans augmenter la course elle-même des vérins, conservant ainsi une bonne rapidité du cycle de soudure.

Ainsi, selon l'invention, une machine perfectionnée doit permettre de remplacer un parc de plusieurs machines existantes adaptées chacune à une gamme de dimensions de pièces à souder.

Pour atteindre ces objets ainsi que d'autres, une machine de soudage par plaque chauffante selon l'invention combine les caractéristiques de la revendication 1.

On assure ainsi une bonne tenue mécanique des porte-pièces et de la plaque chauffante, pour garantir une bonne reproductibilité de la soudure.

Des modes de réalisation avantageux sont définis par les revendications dépendantes.
- le chariot porte-plaque chauffante comprend au moins deux flasques latéraux verticaux munis chacun d'une lumière d'indexation avec une partie principale linéaire verticale dont un bord se raccorde à plusieurs parties secondaires obliques s'écartant vers le bas et décalées verticalement les unes des autres,
- l'armature porte-plaque chauffante comprend des ergots ou tiges horizontaux transversaux venant s'engager dans les lumières d'indexation du chariot porte-plaque chauffante, et pouvant coulisser dans lesdites lumières d'indexation pour pénétrer sélectivement dans l'une des parties secondaires obliques et venir en butée dans son fond.

Une disposition avantageuse pour réduire l'encombrement de la machine de soudage consiste à prévoir que le chariot porte-plaque chauffante soit sollicité, dans sa course d'insertion, par deux vérins horizontaux disposés en partie supérieure du bâti de part et d'autre de l'espace intérieur du bâti.

Avec une telle machine dont les possibilités de réglage sont augmentées, il est avantageux de prévoir que la porte donnant accès à l'espace intérieur du bâti puisse s'ouvrir rapidement et largement. Pour cela, la porte peut comprendre deux volets latéraux télescopiques.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une vue de côté, paroi latérale de bâti enlevée, d'une machine de soudure par plaque chauffante selon un mode de réalisation de l'invention, avec la plaque chauffante en position de chargement ;
- la figure 2 est une vue de dessus, paroi supérieure enlevée, de la machine de soudure de la figure 1, porte ouverte et plaque chauffante en position de chargement ;
- la figure 3 est une vue de face de la machine de soudure de la figure 1. porte ouverte ;
- la figure 4 est une vue partielle de côté en coupe, illustrant les moyens d'indexation du support de plaque chauffante selon un mode de réalisation de la présente invention ;
- la figure 5 est une vue de côté montrant le détail de réalisation d'une table à hauteur réglable selon un mode de réalisation de la présente invention ; et
- la figure 6 illustre les possibilités de réglage de la machine de soudure de la figure 1.

### DESCRIPTION DES MODES DE REALISATION PREFERES

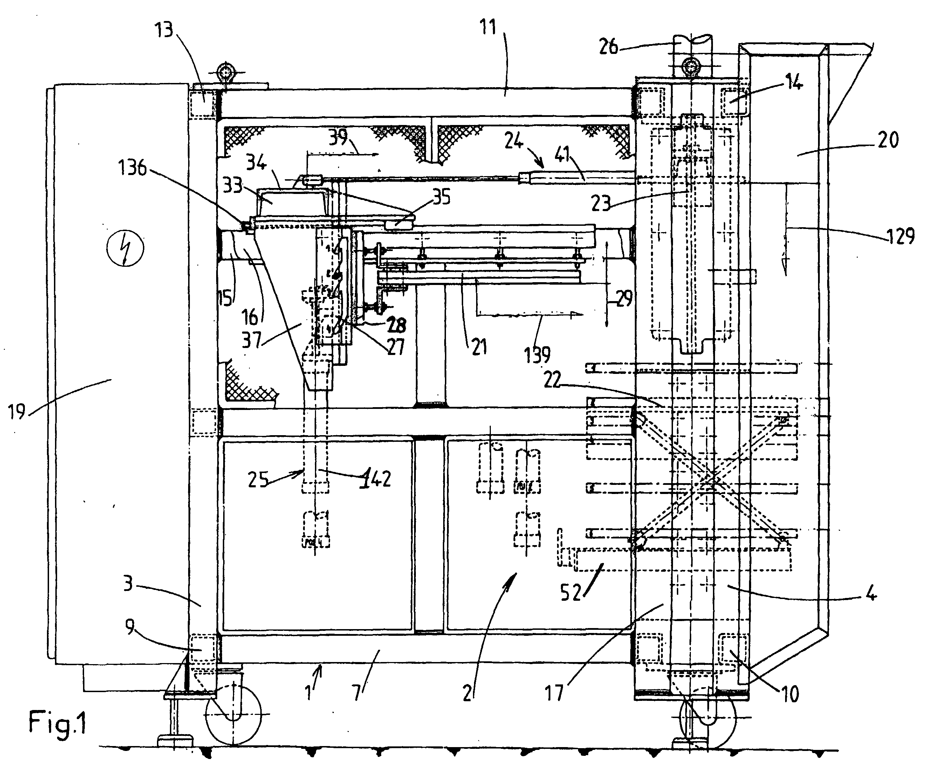

Dans le mode de réalisation illustré sur les figures, en particulier sur les figures 1 à 3, une machine de soudage selon l'invention comprend de façon générale un bâti 1 sensiblement parallélépipédique définissant un espace intérieur 2 contenant l'ensemble des organes fonctionnels de la machine de soudage. Le bâti 1 comprend une structure porteuse définie globalement par quatre montants verticaux respectifs 3, 4, 5 et 6 disposés aux quatre coins de l'espace intérieur 2, par deux longerons inférieurs 7 et 8 et deux traverses inférieures d'extrémité 9 et 10, et par deux longerons supérieurs opposés 11 et 12 et deux traverses supérieures d'extrémité 13 et 14.

Dans la réalisation illustrée, on prévoit en outre deux longerons intermédiaires 15 et 16 opposés, sensiblement aux trois quarts de la hauteur du bâti 1, ainsi que des montants intermédiaires 17 et 18 au voisinage des montants respectifs 4 et 5.

Une armoire électrique 19, contenant les organes de commutation et de commande, est ajoutée en applique sur la face postérieure du bâti définie par les montants postérieurs 3 et 6 et les traverses postérieures 9 et 13. Un système de porte 20 est ajouté en applique sur la face antérieure du bâti définie par les montants antérieurs 4 et 5 et les traverses antérieures 10 et 14.

L'espace intérieur 2 du bâti 1 contient les organes fonctionnels de la machine de soudage comprenant en particulier une plaque chauffante 21, un premier dispositif porte-pièce 22, un second dispositif porte-pièce 23 en regard du premier dispositif porte-pièce 22, des premiers moyens 24 pour déplacer la plaque chauffante 21 selon une course d'insertion 39 parallèlement à son plan, des seconds moyens 25 pour déplacer la plaque chauffante 21 selon une course de soudure 29 perpendiculairement à son plan, et des troisièmes moyens 26 pour déplacer le second dispositif porte-pièce 23 selon une course de contact 129 perpendiculaire au plan de la plaque chauffante 21. Selon l'invention, on prévoit en outre des moyens d'indexage 27 pour indexer la course de soudure 29 de la plaque chauffante 21, par déplacement de ses deux positions extrêmes perpendiculairement au plan de la plaque chauffante 21 vers ou à l'écart du premier dispositif porte-pièce 22.

Dans la réalisation illustrée sur les figures, la plaque chauffante 21 est orientée en position sensiblement horizontale, sa course d'insertion 39 étant sensiblement horizontale et sa course de soudure 29 étant sensiblement verticale. Le premier dispositif porte-pièce 22 est disposé en partie inférieure de l'espace intérieur 2 sur le bâti 1 et le second dispositif porte-pièce 23 est disposé en position supérieure dans l'espace intérieur 2 du bâti 1, sa course de contact 129 étant sensiblement verticale.

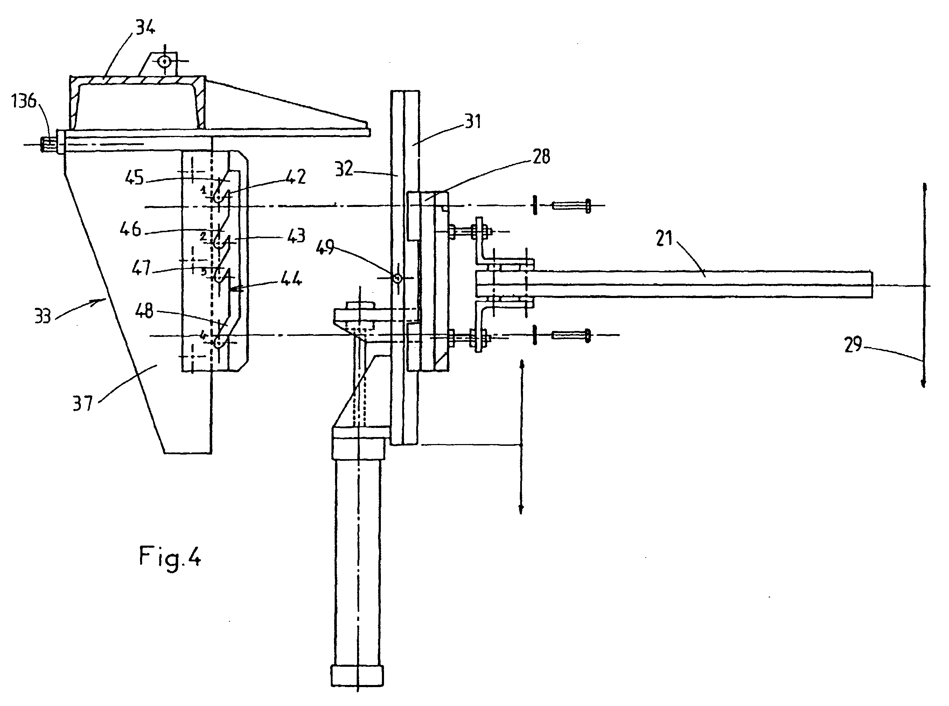

La plaque chauffante 21 est montée sur une console mobile porte-plaque chauffante 28 elle-même déplaçable par translation verticale selon ladite course de soudure illustrée par la flèche 29 sur les figures 1 et 4, perpendiculairement au plan de la plaque chauffante 21, par coulissement sur des guides verticaux 30 et 31 d'une armature 32 elle-même portée par un chariot porte-plaque chauffante 33.

Le chariot porte-plaque chauffante 33 comprend une traverse principale supérieure 34 de chariot dont les deux extrémités coulissent par des patins 35 et 36 sur des guidages longitudinaux portés par les longerons intermédiaires 15 et 16. Le chariot porte-plaque chauffante 33 comprend en outre deux flasques latéraux verticaux 37 et 38 conformés pour tenir l'armature 32 et reliés à leurs extrémités supérieures par une plaque de liaison horizontale 133 tenue par la traverse principale supérieure 34. De préférence, la plaque de liaison horizontale 133 est montée à coulissement longitudinal dans la direction de la course de soudure 29, ses deux bords latéraux étant engagés dans des glissières latérales 134 et 135 solidaires de la traverse principale supérieure 34. Une vis de réglage postérieure 136 permet de régler la position longitudinale des flasques 37 et 38 et de la plaque de liaison 133 par rapport à la traverse principale supérieure 34, permettant ainsi un réglage fin de la position de la plaque chauffante pour l'étape de soudure, comme illustré par la flèche 139.

Dans sa course longitudinale d'insertion 39 illustrée sur la figure 1, le chariot porte-plaque chauffante 33 coulisse sur les guides longitudinaux en étant sollicité par deux vérins horizontaux 40 et 41 disposés en partie supérieure du bâti 1 de part et d'autre de l'espace intérieur 2 de soudure et attelés aux extrémités de la traverse principale supérieure 34.

On comprend que la position particulière des vérins 40 et 41 d'actionnement de la plaque chauffante 21 selon la course d'insertion 39 permet de réaliser une machine de soudure compacte, présentant une longueur réduite.

Dans sa course de soudure 29, la console mobile porte-plaque chauffante 28 coulisse sur les guides verticaux 30 et 31 de l'armature 32 et est sollicitée par un vérin vertical 142 porté par l'armature 32 et dont la course est réglable.

Selon l'invention, on prévoit une possibilité de réglage de position du premier dispositif porte-pièce 22, par déplacement perpendiculairement à la plaque chauffante 21, verticalement, vers ou à l'écart du second dispositif porte-pièce 23.

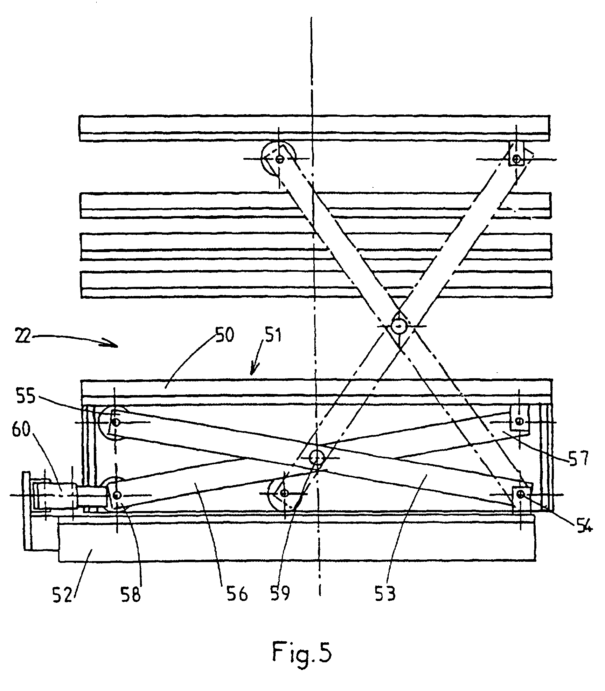

Pour cela, dans le mode de réalisation illustré sur les figures 1 et 5, le premier dispositif porte-pièce 22 peut par exemple comprendre une table 50 à hauteur réglable, montée sur le bâti 1.

La table 50, dans la réalisation illustrée, comprend un plateau supérieur 51 relié à un support inférieur 52 fixe par des éléments de liaison expansibles comportant chacun : un premier bras 53 dont une extrémité 54 est articulée sur le support inférieur 52 et dont l'autre extrémité 55 coulisse sous le plateau supérieur 51, et un second bras 56 dont une extrémité 57 est articulée sous le plateau supérieur 51 et dont l'autre extrémité 58 coulisse sur le support inférieur 52. Les deux bras 53 et 56 sont articulés l'un à l'autre dans leurs zones centrales 59, et l'extrémité coulissante 58 du second bras 56 est sollicitée en coulissement horizontal sur le support inférieur 52 par un vérin 60 pour assurer le réglage en hauteur de la table 50.

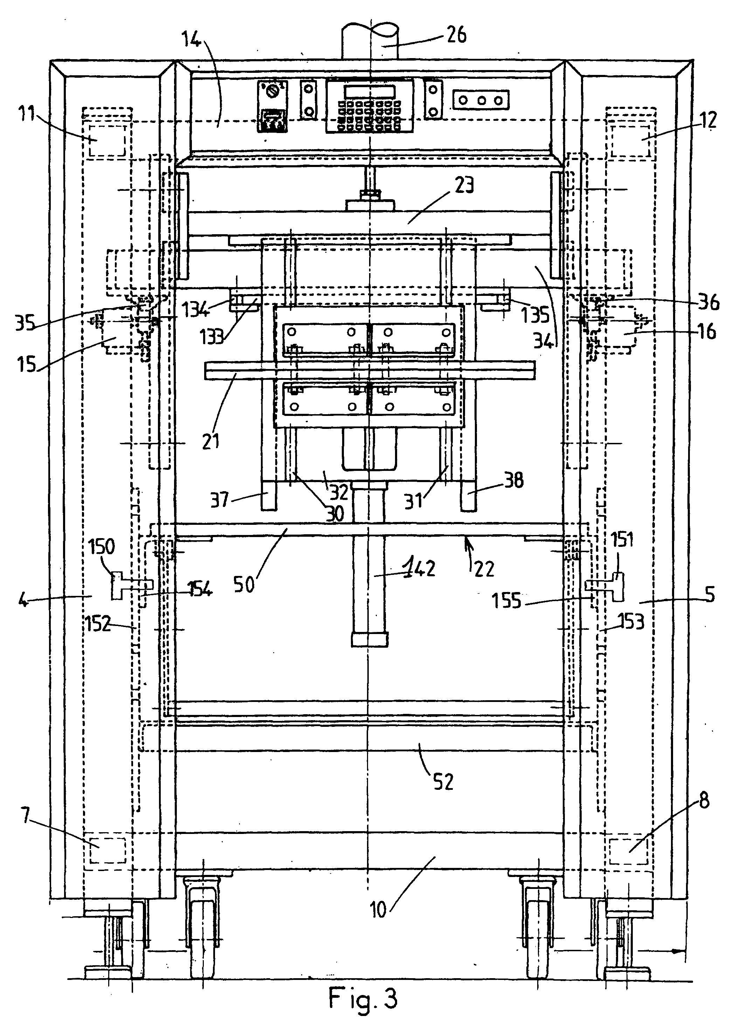

Comme illustré sur la figure 3, l'immobilisation ou verrouillage de la table 50 en une position déterminée choisie parmi un ensemble de positions verticales prédéfinies peut être assurée par des vis transversales telles que les vis 150 et 151 engagées sélectivement dans des trous correspondants ménagés respectivement dans des plaques de guidage latérales 152 et 153 fixes du bâti 1 et dans des équerres de guidage 154 et 155 portées par la table 50.

Le fonctionnement de la machine de soudage est décrit ci-après. En position de chargement, illustrée sur les figures 1 à 3, la plaque chauffante 21, portant des blocs de chauffe aux profils des surfaces respectives de raccordement des pièces à souder, est dans une position de chargement, en retrait des premier et second dispositifs porte-pièce 22 et 23, le second dispositif porte-pièce 23 étant en position de retrait à l'écart du premier dispositif porte-pièce 22. On peut alors amener une première pièce à souder, tenue sur le premier dispositif porte-pièce 22 par un premier outillage spécifique adapté à la forme de la première pièce à souder et conformé pour se fixer au premier dispositif porte-pièce 22. On peut également amener la seconde pièce à souder, fixée au second dispositif porte-pièce 23 par un second outillage spécifique adapté à la forma de la seconde pièce à souder et conformé pour être fixé au second dispositif porte-pièce 23. Les surfaces respectives de raccordement des deux pièces à souder se retrouvent alors face à face et écartées l'une de l'autre.

Par actionnement des vérins 40 et 41, on amène la plaque chauffante 21 selon la course d'insertion 39 entre les deux pièces à souder, c'est-à-dire entre les premier et second dispositifs porte-pièce 22 et 23, dans l'intervalle suffisant devant exister entre les deux faces de raccordement des pièces à souder. Par actionnement du vérin 142, on abaisse la plaque chauffante 21 selon la course de soudure 29 jusqu'à appliquer la face inférieure de son bloc de chauffe inférieur en appui contra la face de raccordement de la première pièce à souder fixée au premier dispositif porte-pièce 22, la plaque chauffante 21 étant alors en appui sur des butées portées par l'outillage du premier dispositif porte-pièce 22. Par actionnement du vérin 26, on abaisse le second dispositif porte-pièce 23 selon la course de contact 129 pour que la seconde pièce à souder qu'il porte vienne en appui par sa face de raccordement contre la face supérieure du bloc de chauffe supérieur de la plaque chauffante 21. des butées portées par l'outillage du second dispositif porte-pièce 23 venant en appui sur la plaque chauffante 21. La plaque chauffante 21, qui est maintenue à température appropriée par des résistances électriques alimentées par une source extérieure d'énergie électrique, produit l'échauffement des deux faces de raccordement des pièces à souder et leur fusion superficielle partielle.

Par actionnement du vérin 26, on soulève alors le second portepièce 23, puis par actionnement successif du vérin 142 et du couple de vérins 40 et 41, on soulève la plaque chauffante 21 puis on la ramène en position de chargement en retrait des premier et second dispositifs porte-pièce 22 et 23, puis on actionne le vérin 26 pour redescendre le second dispositif porte-pièce 23 jusqu'à plaquer l'une contre l'autre les deux faces de raccordement des pièces à souder. L'appui des deux pièces à souder l'une contre l'autre est maintenu pendant un temps suffisant pour réaliser la soudure, et l'on peut enfin relever le second dispositif porte-pièce 23 et enlever l'ensemble des deux pièces soudées l'une à l'autre.

L'invention permet d'adapter, de façon fiable, rapide et peu onéreuse, la position du premier dispositif porte-pièce 22 à la taille respective des deux pièces à souder. Pour cela, en fonction des pièces à souder, on choisit de positionner le premier dispositif porte-pièce 22 selon une position verticale appropriée, par actionnement du vérin 60. On empêche ensuite tout mouvement du premier dispositif porte-pièce 22 en engageant les vis transversales 150 et 151 dans les trous correspondants des plaques 152 et 153 et des équerres 154 et 155.

Ainsi, sans augmentation de la course de soudure 29 de la plaque chauffante 21, on augmente la zone verticale relative totale que peut atteindre la plaque chauffante 21, ce qui augmente la plage de tailles différentes des pièces que l'on peut souder.

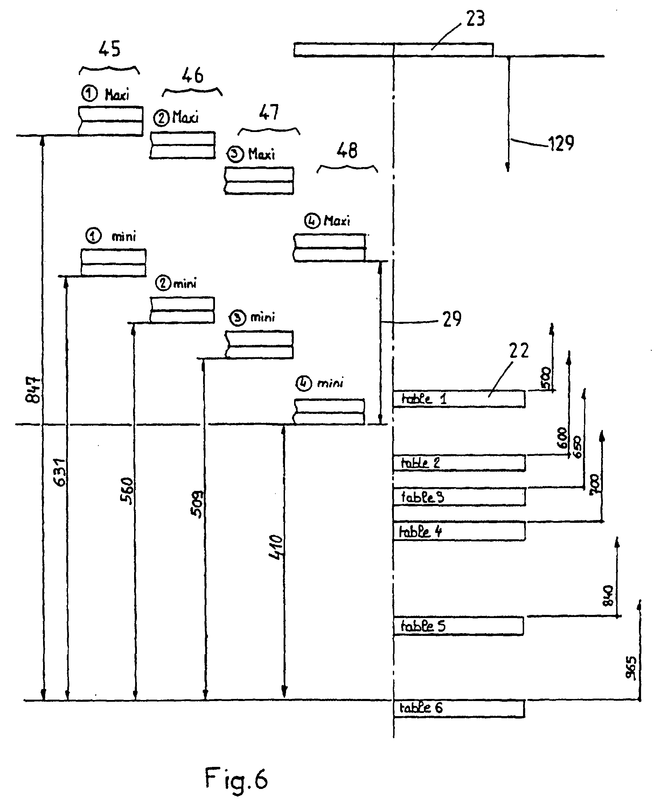

Cette première possibilité d'adaptation selon l'invention est illustrée sur la figure 6. Sur la partie droite de la figure, on a représenté plusieurs positions possibles du premier dispositif porte-pièce 22, en fonction de la sollicitation du vérin 60. On comprendra que la position inférieure convient lorsque la première pièce à souder a une grande hauteur et la seconde pièce à souder a une faible hauteur relative. Inversement, la position supérieure convient lorsque la première pièce à souder a une plus faible hauteur et la seconde pièce à souder a une plus grande hauteur relative.

En complément ou en alternative, on peut prévoir que l'ensemble constitué par l'armature 32, la console porte-plaque chauffante 28 et le vérin 142 puisse être déplacé en bloc verticalement, selon un déplacement d'indexage entre plusieurs positions distinctes sur le chariot porte-plaque chauffante 33, par les moyens d'indexage 27. Par ce déplacement d'indexage, on déplace ainsi simultanément les deux positions extrêmes de la course de soudure 29 de la plaque chauffante 21. On peut ainsi choisir la position des positions extrêmes de course de soudure 29 dans l'espace intérieur 2, permettant une adaptation à la taille des pièces à souder.

Dans le mode de réalisation illustré sur les figures, et en particulier sur la figure 4, les moyens d'indexage 27 pour indexer la course de soudure 29 de la plaque chauffante 21 comprennent des moyens pour fixer sélectivement l'armature 32 sur le chariot porte-plaque chauffante 33 selon plusieurs positions décalées les unes des autres dans la direction verticale perpendiculaire à la plaque chauffante 21.

En pratique, le chariot porte-plaque chauffante 33 comprend au moins les deux flasques latéraux verticaux 37 et 38 qui sont munis chacun d'une lumière d'indexation telle que la lumière 42. La lumière 42 comprend une partie principale 43 linéaire verticale dont un bord 44 vertical se raccorde à plusieurs parties secondaires obliques 45, 46, 47 et 48 s'écartant vers le bas, décalées verticalement les unes des autres, comme illustré, et comportant des fonds alignés sur un même axe vertical.

L'armature 32 comprend des ergots ou tiges horizontaux 49, orientés transversalement et conformés pour venir s'engager dans les lumières d'indexation telles que la lumière 42 du chariot porte-plaque chauffante 33 et pour coulisser dans lesdites lumières d'indexation 42 pour pénétrer sélectivement dans l'une des parties secondaires obliques 45 à 48 et venir en butée dans le fond de ladite partie secondaire oblique 45 à 48 choisie. Des faces correspondantes du chariot porte-plaque chauffante 33 et de l'armature 32 forment surfaces d'appui s'opposant au basculement de l'armature, pour le maintien en position horizontale fixe de la plaque chauffante 21 par rapport au chariot porte-plaque chauffante 33.

La figure 6 illustre, sur sa partie gauche, les possibilités additionnelles de réglage vertical obtenues par les moyens d'indexage 27. On conçoit que l'on peut ainsi déplacer verticalement la course de soudure 29 et l'on augmente les possibilités d'adaptation de position relative de la plaque chauffante 21 par rapport au premier dispositif porte-pièce 22, en fonction des tailles de pièces à souder.

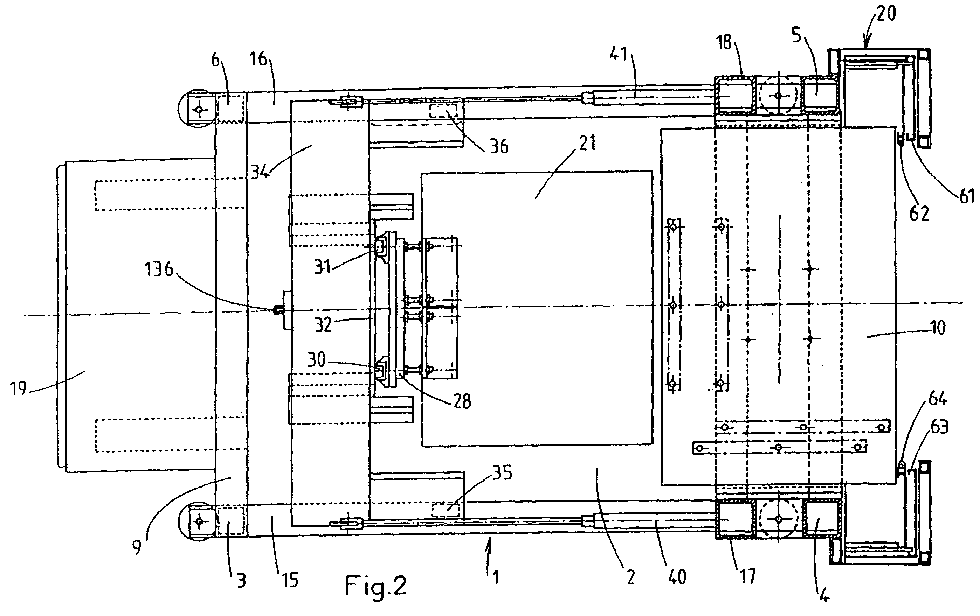

Les possibilités additionnelles de réglage des positions relatives en hauteur des éléments fonctionnels de la machine de soudage conduisent à prévoir un système de porte 20 qui soit bien adapté à de telles possibilités. De préférence, on pourra utiliser une porte à deux volets latéraux télescopiques à escamotage latéral, comme illustré sur la figure 2 : la porte, illustrée en position ouverte sur la figure, comprend un premier volet latéral télescopique formé d'un premier panneau 61 et d'un second panneau 62 coulissant latéralement l'un par rapport à l'autre et par rapport au bâti 1. De même, un second volet latéral télescopique comprend un premier panneau 63 et un second panneau 64 coulissant latéralement l'un par rapport à l'autre et par rapport au bâti 1. On réalise ainsi une porte d'encombrement réduit en position ouverte, et pouvant se fermer et s'ouvrir très rapidement pendant le cycle de fonctionnement.

La présente invention n'est pas limitée aux modes de réalisation qui ont été explicitement décrits, mais elle en inclut les diverses variantes et généralisations contenues dans le domaine des revendications ci-après.

## Revendications

1. Machine de soudage par plaque chauffante (21), comprenant un bâti (1), une plaque chauffante (21), un premier dispositif porte-pièce (22), un second dispositif porte-pièce (23) en regard du premier dispositif porte-pièce (22), des premiers moyens (24) pour déplacer la plaque chauffante (21) selon une course d'insertion (39) parallèlement à son plan entre une position de soudure engagée entre les premier et second dispositifs porte-pièce (22, 23) et une position de chargement en retrait des premier et second dispositifs porte-pièce (22, 23), des seconds moyens (25) pour déplacer la plaque chauffante (21) selon une course de soudure (29) perpendiculairement à son plan entre deux positions extrêmes, et des troisièmes moyens (26), différents des seconds moyens (25), pour déplacer le second dispositif porte-pièce (23) selon une course de contact (129) perpendiculaire au plan de la plaque chauffante (21) entre deux positions respectives d'appui et de retrait vers et à l'écart du premier dispositif porte-pièce (22), avec des moyens pour déplacer le premier dispositif porte-pièce (22) par déplacement perpendiculairement à la plaque chauffante (21) vers ou à l'écart du second dispositif porte-pièce (23), lesdits moyens pour déplacer le premier dispositif porte-pièce (22) comprenant :
- une table (50) à position réglable, montée sur le bâti (1), pour assurer le déplacement du premier dispositif porte-pièce (22) vers ou à l'écart du second dispositif porte-pièce (23),
- des moyens (150, 155) pour verrouiller la table (50) en une position déterminée choisie parmi un ensemble de positions prédéfinies et tenir ainsi les efforts de pression exercés sur la table (50) lors du fonctionnement de la machine.

2. Machine selon la revendication 1, **caractérisée en ce que** les moyens (150, 155) pour verrouiller la table (50) comprennnent des vis transversales (150, 151) engagées sélectivement dans des trous correspondants ménagés respectivement dans des plaques de guidage latérales (152, 153) fixes du bâti (1) et dans des équerres de guidage (154, 155) portées par la table (50).

3. Machine de soudage selon l'une des revendications 1 ou 2, **caractérisée en ce qu'**elle comprend en outre des moyens d'indexage (27) pour indexer la course de soudure (29) de la plaque chauffante (21) par déplacement de ses deux positions extrêmes de course de soudure (29) perpendiculairement au plan de la plaque chauffante (21) vers ou à l'écart du premier dispositif porte-pièce (22).

4. Machine de soudage selon la revendication 3, **caractérisée en ce que** la table (50) comprend un plateau supérieur (51) relié à un support inférieur (52) par des éléments de liaison expansibles comportant chacun un premier bras (53) dont une extrémité (54) est articulée sur le support inférieur (52) et dont l'autre extrémité (55) coulisse sous le plateau supérieur (51), et un second bras (56) dont une extrémité (57) est articulée sous le plateau supérieur (51) et dont l'autre extrémité (58) coulisse sur le support inférieur (52), les deux bras (53, 56) étant articulés l'un à l'autre dans leurs zones centrales (59), l'extrémité coulissante (58) du second bras (56) étant sollicitée en coulissement horizontal sur le support inférieur (52) par un vérin (60) pour assurer le réglage en hauteur de la table (50).

5. Machine de soudage selon l'une quelconque des revendications 1 à 4, **caractérisée en ce que** la plaque chauffante (21) est montée sur une console mobile porte-plaque chauffante (28) déplaçable par translation selon ladite course de soudure (29) perpendiculaire au plan de la plaque chauffante (21) sur une armature (32) elle-même portée par un chariot porte-plaque chauffante (33), le chariot porte-plaque chauffante (33) étant lui-même déplaçable selon ladite course d'insertion (39) parallèle au plan de la plaque chauffante (21) sur des premiers guidages (15, 16) solidaires du bâti (1), les moyens d'indexage (27) pour indexer la course de soudure (29) de la plaque chauffante (21) comprenant des moyens pour fixer sélectivement l'armature porte-plaque chauffante (32) sur le chariot porte-plaque chauffante (33) selon plusieurs positions décalées les unes des autres dans la direction perpendiculaire à la plaque chauffante (21).

6. Machine de soudage selon la revendication 5, **caractérisée en ce que** la plaque chauffante (21) est orientée en position sensiblement horizontale, sa course d'insertion (39) étant sensiblement horizontale et sa course de soudure (29) étant sensiblement verticale, le premier dispositif porte-pièce (22) étant disposé en position inférieure sur le bâti (1), et le second dispositif porte-pièce (23) étant disposé en position supérieure sur le bâti (1) et sa course de contact (129) étant sensiblement verticale.

7. Machine de soudage selon la revendication 6, **caractérisée en ce que** :
- le chariot porte-plaque chauffante (33) comprend au moins deux flasques latéraux verticaux (37, 38) munis chacun d'une lumière d'indexation (42) avec une partie principale (43) linéaire verticale dont un bord (44) se raccorde à plusieurs parties secondaires obliques (45-48) s'écartant vers le bas et décalées verticalement les unes des autres,
- l'armature porte-plaque chauffante (32) comprend des ergots ou tiges horizontaux (49) transversaux venant s'engager dans les lumières d'indexation (42) du chariot porte-plaque chauffante (33), et pouvant coulisser dans lesdites lumières d'indexation (42) pour pénétrer sélectivement dans l'une des parties secondaires obliques (45-48) et venir en butée dans son fond.

8. Machine de soudage selon l'une des revendications 6 ou 7, **caractérisée en ce que** le chariot porte-plaque chauffante (33) est sollicité, dans sa course d'insertion, par deux vérins horizontaux (40, 41) disposés en partie supérieure du bâti (1) de part et d'autre de l'espace intérieur (2) du bâti (1).

9. Machine de soudage selon l'une quelconque des revendications 5 à 8, **caractérisée en ce que** la console mobile porte-plaque chauffante (28) coulisse sur des guides (30, 31) de l'armature (32) et est sollicitée dans sa course de soudure (29) par un vérin (142) porté par l'armature (32).

10. Machine de soudage selon l'une quelconque des revendications 1 à 9, **caractérisée en ce que** le bâti (1) comprend une porte (20) à deux volets latéraux télescopiques (61,62 ; 63, 64).

11. Machine de soudage selon l'une quelconque des revendications 1 à 10, **caractérisée en ce que** :
- dans la position extrême de la course de soudure de la plaque chauffante (21), dans laquelle le premier bloc de chauffe est en appui contre la face de raccordement de la première pièce à souder fixée au premier dispositif porte-pièce (22), la plaque chauffante (21) est en appui sur des butées portées par l'outillage du premier dispositif porte-pièce (22),
- en position d'appui du second dispositif porte-pièce (23), dans laquelle la seconde pièce à souder vient en appui par sa face de raccordement contre la face supérieure du second bloc de chauffe de la plaque chauffante (21), des butées portées par l'outillage du second dispositif porte-pièce (23) viennent en appui sur la plaque chauffante (21).

## Patentansprüche

1. Vorrichtung zum Schweißen mittels Heizplatte (21), umfassend ein Gehäuse (1), eine Heizplatte (21), einen ersten Werkstückhalter (22), einen zweiten Werkstückhalter (23), der dem ersten Werkstückhalter (22) gegenüberliegt, erste Mittel (24) zum Verschieben der Heizplatte (21) parallel zu ihrer Ebene auf einem Einfahrweg (39) zwischen einer Schweißposition, in der sie zwischen den ersten und den zweiten Werkstückhalter (22, 23) eingreift, und einer Beschickungsposition außerhalb des ersten und des zweiten Werkstückhalters (22, 23), zweite Mittel (25) zum Verschieben der Heizplatte (21) rechtwinklig zu ihrer Ebene entlang eines zwischen zwei Endstellungen liegenden Schweißhubs (29) sowie von den zweiten Mitteln (25) verschiedene, dritte Mittel (26) zum Verschieben des zweiten Werkstückhalters (23) rechtwinklig zur Ebene der Heizplatte (21) entlang eines Kontakthubs (129) zwischen einer Abstützstellung in Richtung auf den ersten Werkstückhalter (22) und einer vom ersten Werkstückhalter (22) beabstandeten Rückzugsstellung, wobei Mittel zum Verschieben des ersten Werkstückhalters (22) rechtwinklig zur Heizplatte (21) in Richtung auf den zweiten Werkstückhalter (23) oder von diesem weg vorgesehen sind und diese Mittel zum Verschieben des ersten Werkstückhalters (22) aufweisen:
- einen Tisch (50) mit einstellbarer Position, der an dem Gehäuse (1) angebracht ist und zur Verschiebung des ersten Werkstückhalters (22) in Richtung auf den zweiten Werkstückhalter (23) bzw. von diesem weg dient,
- Mittel (150, 155) zum Verriegeln des Tisches (50) in einer bestimmten, aus einer Mehrzahl von vorbestimmten Stellungen gewählten Stellung und zum Aufnehmen der Druckkräfte, die im Betrieb der Vorrichtung auf den Tisch (50) wirken.

2. Vorrichtung nach Anspruch 1, **dadurch gekennzeichnet, daß** die Mittel (150, 155) zum Verriegeln des Tisches (50) in Querrichtung verlaufende Schrauben (150, 151) aufweisen, die selektiv in entsprechende Löcher eingreifen, die in feste seitliche Führungsplatten (152, 153) des Gehäuses (1) und in am Tisch (50) angebrachte Führungswinkel (154, 155) eingearbeitet sind.

3. Vorrichtung nach Anspruch 1 oder 2, **dadurch gekennzeichnet, daß** diese ferner Verriegelungsmittel (27) zum Einstellen des Schweißhubs (29) der Heizplatte (21) durch Verschieben der beiden Endstellungen des Schweißhubs (29) rechtwinklig zur Ebene der Heizplatte (21) in Richtung auf den ersten Werkstückhalter (22) oder von diesem weg aufweist.

4. Vorrichtung nach Anspruch 3, **dadurch gekennzeichnet, daß** der Tisch (50) eine obere Platte (51) aufweist, die mit einem oberen Träger (52) über ausfahrbare Verbindungsmittel verbunden ist, jeweils umfassend einen ersten Arm (53), von dem ein Ende (54) an dem unteren Träger (52) angelenkt und das andere Ende (55) unter der oberen Platte (51) verschiebbar ist, sowie einen zweiten Arm (56), von dem ein Ende (57) unterhalb der oberen Platte (51) angelenkt und das andere Ende (58) auf dem unteren Träger (52) verschiebbar ist, wobei die beiden Arme (53, 56) in ihrem mittleren Bereich (59) gelenkig miteinander verbunden sind und das verschiebbare Ende (58) des zweiten Armes (56) zur Horizontalverschiebung auf dem unteren Träger (52) von einem Verschiebezylinder (60) beaufschlagt ist, um die Höheneinstellung des Tisches (50) herbeizuführen.

5. Vorrichtung nach einem der Ansprüche 1 bis 4, **dadurch gekennzeichnet, daß** die Heizplatte (21) auf einer diese tragenden, beweglichen Konsole (28) angebracht ist, die entsprechend dem Schweißhub (29) rechtwinklig zur Ebene der Heizplatte (21) an einem Beschlagteil (32) verschiebbar ist, welches seinerseits an einem die Heizplatte tragenden Schlitten (33) gelagert ist, der entsprechend dem Einfahrweg (39) parallel zur Ebene der Heizplatte (21) an ersten Führungen (15, 16) verschiebbar ist, die fest mit dem Gehäuse (1) verbunden sind, wobei die Verriegelungsmittel (27) zum Einstellen des Schweißhubs (29) der Heizplatte (21) Mittel zur selektiven Fixierung des die Heizplatte tragenden Beschlagteils (32) auf dem die Heizplatte tragenden Schlitten (33) in mehreren, zueinander abgestuften Stellungen in einer zur Heizplatte (21) rechtwinkligen Richtung aufweisen.

6. Vorrichtung nach Anspruch 5, **dadurch gekennzeichnet, daß** die Heizplatte (21) im wesentlichen horizontal ausgerichtet ist, wobei ihr Einfahrweg (39) im wesentlichen horizontal und ihr Schweißhub (29) im wesentlichen vertikal verläuft, wobei der erste Werkstückhalter (22) in einem unteren Bereich an dem Gehäuse (1) und der zweite Werkstückhalter (23) in einem oberen Bereich des Gehäuses (1) angeordnet ist und sein Kontakthub (129) im wesentlichen in vertikaler Richtung verläuft.

7. Vorrichtung nach Anspruch 6, **dadurch gekennzeichnet,**
- **daß** der die Heizplatte tragende Schlitten (33) wenigstens zwei vertikale, seitliche Flansche (37, 38) hat, von denen jeder eine Positionieröffnung (42) mit einem vertikalen, geradlinigen Hauptabschnitt (43) aufweist, von dem ein Rand (44) in mehrere, schräge Sekundärabschnitte (45 - 48) übergeht, die nach unten verlaufen und vertikal zueinander versetzt sind,
- **daß** das die Heizplatte tragende Beschlagteil (32) horizontale, in Querrichtung verlaufende Vorsprünge oder Stifte (49) trägt, die für den Eingriff in die Positionieröffnungen (42) des die Heizplatte tragenden Schlittens (33) ausgebildet und in den Positionieröffnungen (42) so verschiebbar sind, daß sie selektiv in einen der schrägen Sekundärabschnitte (45 - 48) eingreifen und an seinem Boden zur Anlage kommen.

8. Vorrichtung nach Anspruch 6 oder 7, **dadurch gekennzeichnet, daß** der die Heizplatte tragende Schlitten (33) auf seinem Einfahrweg von zwei horizontalen Stellzylindern (40, 41) beaufschlagt ist, welche im oberen Bereich des Gehäuses (1) zu beiden Seiten des Innenraums (2) des Gehäuses (1) angeordnet sind.

9. Vorrichtung nach einem der Ansprüche 5 bis 8, **dadurch gekennzeichnet, daß** die bewegliche, die Heizplatte tragende Konsole (28) an Führungen (30, 31) des Beschlagteils (32) verschiebbar und auf ihrem Schweißhub (29) von einem Stellzylinder (142) beaufschlagt ist, der an dem Beschlagteil (32) angebracht ist.

10. Vorrichtung nach einem der Ansprüche 1 bis 9, **dadurch gekennzeichnet, daß** das Gehäuse (1) eine Tür (20) mit zwei teleskopischen Seitenflügeln (61, 62; 63, 64) aufweist.

11. Vorrichtung nach einem der Ansprüche 1 bis 10, **dadurch gekennzeichnet,**
- **daß** in der Extremstellung des Schweißhubs der Heizplatte (21), in der der erste Heizblock an der Verbindungsfläche des ersten zu schweißenden und am ersten Werkstückhalter (22) fixierten Werkstücks anliegt, die Heizplatte (21) an Anschlägen anliegt, die von den Spannelementen des ersten Werkstückhalters (22) getragen sind,
- **daß** in der Abstützstellung des zweiten Werkstückhalters (23), in der das zweite zu schweißende Werkstück mit seiner Verbindungsfläche an der Oberseite des zweiten Heizblocks der Heizplatte (21) zur Anlage kommt, von dem Spannelement des zweiten Werkstückhalters (23) getragene Anschläge zur Anlage an der Heizplatte (21) kommen.

## Claims

1. Welding machine having a heating plate (21), comprising a frame (1), a heating plate (21), a first workpiece support device (22), a second workpiece support device (23) facing the first workpiece support device (22), first means (24) for moving the heating plate (21) along an insertion travel (39) parallel to its plane between a welding position engaged between the first and second workpiece support devices (22, 23) and a loading position withdrawn from the first and second workpiece support devices (22, 23), second means (25) for moving the heating plate (21) along a welding travel (29) perpendicular to its plane between two extreme positions, and third means (26), different from the second means (25), for moving the second workpiece support device (23) along a contact travel (129) perpendicular to the plane of the heating plate (21) toward and away from the first workpiece support device (22) and between two respective bearing and withdrawn positions, together with means for moving the first workpiece support device (22) perpendicular to the heating plate (21) toward or away from the second workpiece support device (23), said means for moving the first workpiece support device (22) comprising :
- an adjustable position table (50), mounted on the frame (1), to move the first workpiece support device (22) toward or away from the second workpiece support device (23),
- means (150-155) for locking the table (50) in a particular position chosen from a set of predefined positions and to withstand pressure forces exerted on the table (50) during operation of the machine.

2. Welding machine according to claim 1, **characterized in that** the means (150, 155) for locking the table (50) comprise transverse screws (150, 151) selectively engaged in corresponding holes in respective lateral guide plates (152, 153) fixed to the frame (1) and in guide brackets (154, 155) carried by the table (50).

3. Welding machine according to claim 1 or 2, **characterized in that** it further comprises indexing means (27) for indexing the welding travel (29) of the heating plate (21) by movement of its two extreme positions of welding travel (29) perpendicular to the plane of the heating plate (21) toward or away from the first workpiece support device (22).

4. Welding machine according to claim 3, **characterized in that** the table (50) comprises a top plate (51) joined to a bottom support (52) by expandable connecting members each including a first arm (53), one end (54) of which is articulated to the bottom support (52) and the other end (55) of which slides under the top plate (51), and a second arm (56), one end (57) of which is articulated under the top plate (51) and the other end (58) of which slides on the bottom support (52), the two arms (53, 56) being articulated to each other in their central areas (59), the sliding end (58) of the second arm (56) being slid horizontally on the bottom support (52) by a cylinder (60) to adjust the height of the table (50).

5. Welding machine according to any one of claims 1 to 4, **characterized in that** the heating plate (21) is mounted on a mobile heating plate support bracket (28) movable in translation along said welding travel (29) perpendicular to the plane of the heating plate (21) on a frame (32) itself carried by a heating plate support carriage (33), the heating plate support carriage (33) being itself movable along said insertion travel (39) parallel to the plane of the heating plate (21) on first guides (15, 16) attached to the frame (1), indexing means (27) for indexing the welding travel (29) of the heating plate (21) comprising means for selectively fixing the heating plate support frame (32) on the heating plate support carriage (33) in a plurality of positions offset from each other in the direction perpendicular to the heating plate (21).

6. Welding machine according to claim 5, **characterized in that** the heating plate (21) is oriented in a substantially horizontal position, its insertion travel (39) is substantially horizontal and its welding travel (29) is substantially vertical, the first workpiece support device (22) is in a lower position on the frame (1) and the second workpiece support device (23) is in an upper position on the frame (1) and its contact travel (129) is substantially vertical.

7. Welding machine according to claim 6, **characterized in that** :
- the heating plate support carriage (33) comprises at least two vertical lateral flanges (37, 38) each having an indexing opening (42) with a vertical linear main part (43), one end (44) of which is joined to a plurality of oblique secondary parts (45-48) diverging from each other in the downward direction and offset from each other in the vertical direction,
- the heating plate support frame (32) comprises transverse horizontal lugs or rods (49) engaging in the indexing openings (42) of the heating plate support carriage (33), and able to slide in said indexing openings (42) to penetrate selectively into one of the oblique secondary parts (45-48) and to abut against its bottom.

8. Welding machine according to claim 6 or 7, **characterized in that** the heating plate support carriage (33) is moved, along its insertion travel, by two horizontal cylinders (40, 41) in the upper part of the frame (1) on respective opposite sides of the interior part (2) of the frame (1).

9. Welding machine according to any one of claims 5 to 8, **characterized in that** the mobile heating plate support bracket (28) slides on guides (30, 31) of the frame (32) and is moved along its welding travel (29) by a cylinder (142) carried by the frame (32).

10. Welding machine according to any one of claims 1 to 9, **characterized in that** the frame (1) comprises a door (20) with two telescopic lateral flaps (61, 62 ; 63, 64).

11. Welding machine according to any one of claims 1 to 10, **characterized in that** :
- in the extreme position of the welding travel of the heating plate (21), in which the first heating block is pressed against the connecting face of the first workpiece to be welded fixed to the first workpiece support device (22), the heating plate (21) is in bearing engagement with abutments carried by the tooling of the first workpiece support device (22),
- in the bearing engagement position of the second workpiece support device (23), in which the connecting face of the second workpiece to be welded is pressed against the top face of the second heating block of the heating plate (21), abutments carried by the tool of the second workpiece support device (23) are in bearing engagement with the heating plate (21).
